# EUROPEAN PATENT APPLICATION

(11) **EP 2 782 028 A1**
(43) Date of publication of application: **24.09.2014**
(21) Application number: 14159499.4
(22) Date of filing: 13.03.2014
(51) Int. Cl.: G06F 17/30

(54) **Information processing apparatus for adding keywords to files**

(30) Priority: 22.03.2013 JP 2013060270; 22.03.2013 JP 2013060265
(71) Applicant: CANON KABUSHIKI KAISHA, Ohta-ku Tokyo 146-8501 (JP)
(72) Inventor: Kobayashi, Tomoyuki, Ohta-ku, Tokyo (JP)
(74) Representative: Uffindell, Christine Helen

(57) **Abstract**

An information processing apparatus includes an input means for inputting a keyword to be added to a first image and a structuring means for structuring, based on an input order of a plurality of keywords input by the input means, the plurality of keywords.

## Description

### BACKGROUND OF THE INVENTION

### Field of the Invention

The present invention relates to a technique for structuring keywords.

### Description of the Related Art

Japanese Patent Application Laid-Open No. 7-175820 discusses a method in which a user hierarchically structures keywords and adds the hierarchically structured keywords to a file so that a plurality of keywords is added to the file at a time.

Further, Japanese Patent Application Laid-Open No. 10-269121 discusses a method in which a user manages keywords in association with folders and stores a file into a folder so that a plurality of keywords is added to the file at a time.

Illustrative embodiments of the present invention, which will be described below, relate to addition of a keyword to a file and are directed to simplifying an operation regarding the addition of a keyword to a file.

### SUMMARY OF THE INVENTION

According to a first aspect of the present invention, there is provided an information processing apparatus as specified in claims 1 to 8. According to a second aspect of the present invention, there is provided a method for controlling an information processing apparatus as specified in claim 9. According to a third aspect of the present invention, there is provided a program as specified in claim 10. According to a fourth aspect of the present invention, there is provided a storage medium as specified in claim 11.

Further features of the present invention will become apparent from the following description of illustrative embodiments with reference to the attached drawings. Each of the embodiments of the present invention described below can be implemented solely or as a combination of a plurality of the embodiments or features thereof where necessary or where the combination of elements or features from individual embodiments in a single embodiment is beneficial.

### BRIEF DESCRIPTION OF THE DRAWINGS

Fig. 1 illustrates a configuration of an image management system.
Figs. 2A, 2B, and 2C illustrate examples of operation screens of the image management system.
Fig. 3 is a flowchart illustrating keyword structuring processing.
Figs. 4A and 4B illustrate examples of operation screens displayed during the keyword structuring processing.
Figs. 5A and 5B illustrate examples of data structures of databases of the image management system.
Figs. 6A and 6B illustrate examples of operation screens displayed during the keyword structuring processing.
Fig. 7 is a flowchart illustrating image search processing.
Figs. 8A and 8B illustrate examples of operation screens displayed during the image search processing.
Fig. 9 is a flowchart illustrating keyword addition processing.
Figs. 10A and 10B illustrate examples of operation screens displayed during the keyword addition processing.
Fig. 11 is a flowchart illustrating keyword recommendation processing.
Figs. 12A, 12B, 12C, 12D, and 12E illustrate examples of operation screens displayed during the keyword recommendation processing.
Figs. 13A, 13B, and 13C illustrate examples of operation screens displayed during the keyword recommendation processing.
Figs. 14A and 14B illustrate examples of operation screens displayed during the keyword recommendation processing.
Fig. 15 is a flowchart illustrating image search processing with use of structured keywords.
Figs. 16A and 16B illustrate examples of operation screens displayed during the image search processing with use of the structured keywords.
Fig. 17 illustrates a hardware configuration of the image management system.

### DESCRIPTION OF THE EMBODIMENTS

The methods discussed in the above-described Japanese Patent Application Laid-Open No. 7-175820 and Japanese Patent Application Laid-Open No. 10-269121 require execution of an operation for generating structured keywords in advance before addition of a keyword. However, actually, it is difficult to predict all keywords that would be added in the future, and prepare and register them in advance.

Further, employing the methods discussed in the above-described Japanese Patent Application Laid-Open No. 7-175820 and Japanese Patent Application Laid-Open No. 10-269121 allows a user to add a keyword without requiring the user to perform a complicated operation. However, the methods discussed in Japanese Patent Application Laid-Open No. 7-175820 and Japanese Patent Application Laid-Open No. 10-269121 require execution of the operation for generating structured keywords in advance before the addition of the keyword. Using the keywords registered in advance before the addition of the keyword in this manner makes it impossible to add a keyword customized for each user, leading to a problem of a lack of flexibility. On the other hand, this problem does not occur if a keyword is added by a user's text input each time, but this method is cumbersome for users.

Illustrative embodiments of the present invention, which will be described below, are directed to simplifying the operation regarding the addition of a keyword to a file.

Various illustrative embodiments, features, and aspects of the invention will be described in detail below with reference to the drawings. Configurations according to the illustrative embodiments of the present invention, which will be described below, are merely an example, and the present invention is not limited to these configurations.

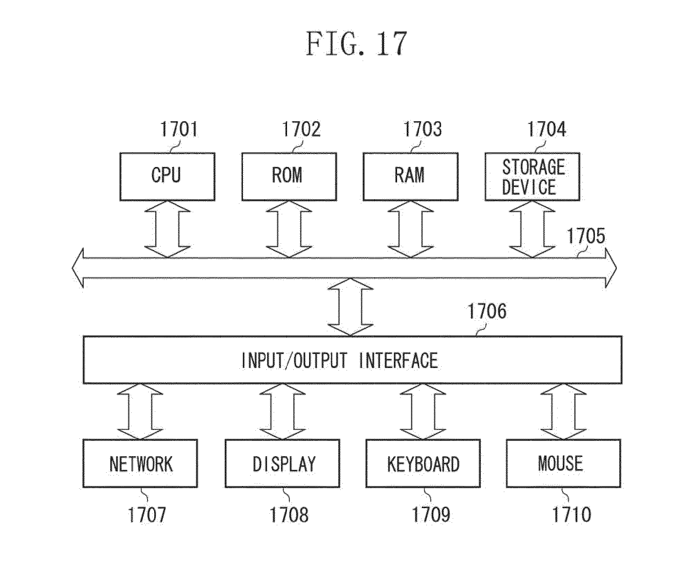

A first illustrative embodiment of the present invention will be described below with reference to the drawings. A hardware configuration of an image management system according to the present illustrative embodiment will be described with reference to Fig. 17. Referring to Fig. 17, a central processing unit (CPU) 1701 controls respective devices connected to the CPU device based on a control program stored in a read only memory (ROM) 1702 or a storage device 1704, which will be described below. The CPU 1701 of each apparatus executes a control program stored in the ROM 1702 or the storage device 1704, thereby realizing operations and a functional configuration of the image management system in respective flowcharts. The read only memory (ROM) 1702 stores various kinds of control programs and data. A random access memory (RAM) 1703 has a work area of the CPU 1701, an area where data is saved during error processing, an area where a control program is loaded, and the like. The storage device 1704 stores various kinds of control programs and various kinds of data. An input/output interface 1706 controls various kinds of devices, and inputs and outputs data. A CPU bus 1705 includes an address bus, a data bus, and a control bus, and connects the respective hardware devices. A network 1707 allows the CPU 1701 to communicate with other apparatuses via the input/output interface 1706. A control program may be supplied to the CPU 1701 from the ROM 1702 or the storage device 1704, or may be acquired from an external apparatus via the network 1707. A display 1708 displays various kinds of data. A keyboard 1709 detects an operation that a user inputs to the apparatus. A mouse 1709 detects an operation that a user inputs to the apparatus.

According to the present illustrative embodiment, an information processing program code for realizing an operation of each apparatus that will be described below is stored in the storage device 1704, and is executed by the CPU 1701. A user operates the image management system with use of the keyboard 1709 and the mouse 1710, and views a result on the display 1708. The mouse 1710 may be replaced with any pointing device such as a trackball or a touch panel as long as the device allows a user to issue an instruction on a screen.

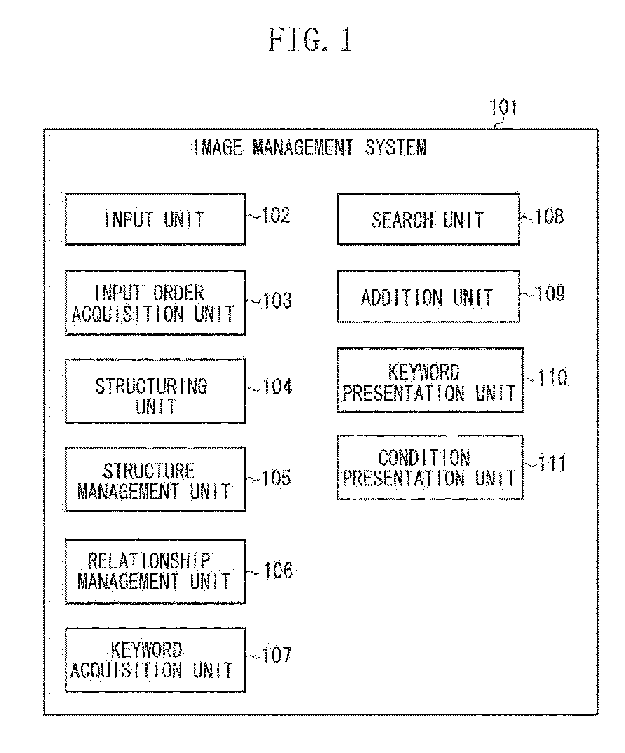

Each CPU 1701 executes a control program stored in the ROM 1702 or the storage device 1704 to control the respective hardware devices, thereby realizing a functional configuration of an image management system 101, which will be described now with reference to Fig. 1. Each unit in the functional configuration that will be described below may be realized by means of hardware.

An input unit 102 receives various kinds of operations performed by a user. Further, the input unit 102 receives one or more keyword inputs by a user's input. An input order acquisition unit 103 acquires from the input unit 102 an order in which the keywords are input. A structuring unit 104 structures the keywords based on the keyword input order acquired by the input order acquisition unit 103. A structure management unit 105 manages the keywords structured by the structuring unit 104. According to the present illustrative embodiment, the structuring unit 104 structures the keywords hierarchically, and the structure management unit 105 manages the keywords in a tree structure that creates nodes from a higher-level node to a lower-level node according to the input order. However, the present illustrative embodiment is not limited to this structure.

A relationship management unit 106 manages corresponding relationships between images and keywords added to the images. According to the present illustrative embodiment, the structure of the keywords managed by the relationship management unit 106 is different from the structure of the keywords managed by the structure management unit 105. The relationship management unit 106 manages the corresponding relationships between images and keywords in a relational database. However, the present illustrative embodiment is not limited to this structure. A keyword acquisition unit 107 acquires a keyword associated with an arbitrary keyword based on the keyword structure managed by the structure management unit 105. A search unit 108 searches for an image to which a keyword matching an arbitrary keyword is added, based on the corresponding relationships between images and keywords managed by the relationship management unit 106. An addition unit 109 adds the keyword acquired by the keyword acquisition unit 107 to an image. The addition unit 109 associates a keyword with an arbitrary image, and registers the association therebetween into the relationship management unit 106. A keyword presentation unit 110 acquires a keyword registered in the structure management unit 105, and displays the keyword according to the structure based on the input order, thereby presenting the keyword to the user. Furthermore, the keyword presentation unit 110 displays a keyword registered in the relationship management unit 106 in a structure different from the structure based on the keyword input order. Further, the keyword presentation unit 110 presents the keyword acquired by the keyword acquisition unit 107 to a user. A condition presentation unit 111 presents a condition for a search performed by the search unit 108.

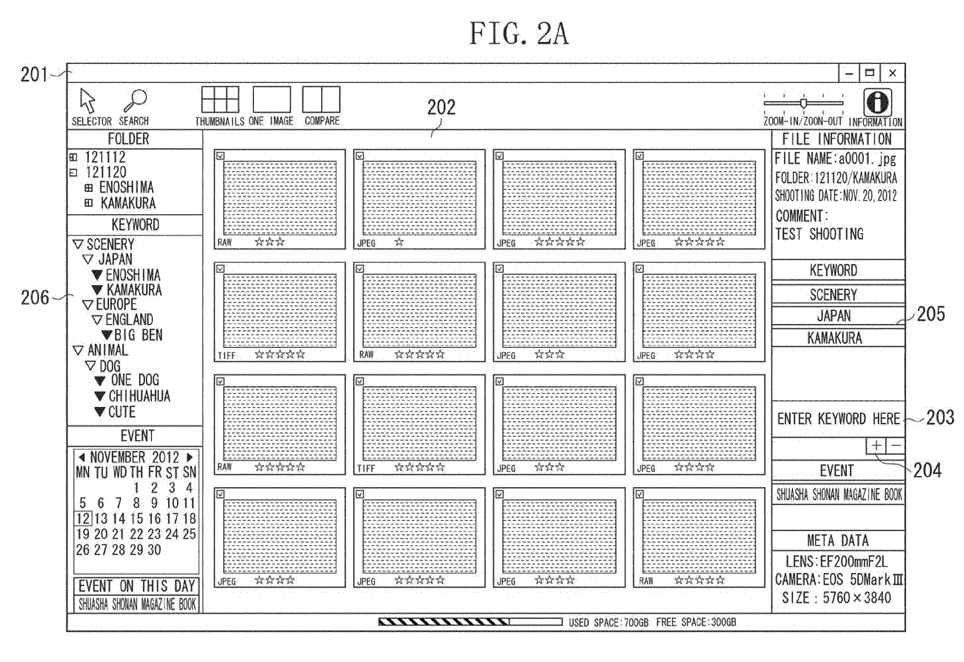

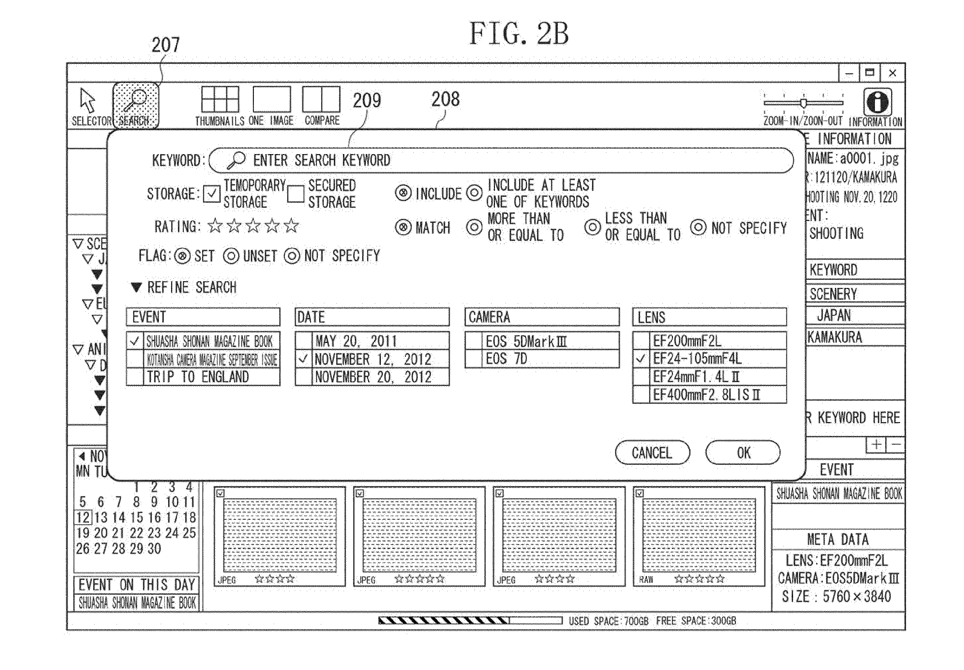

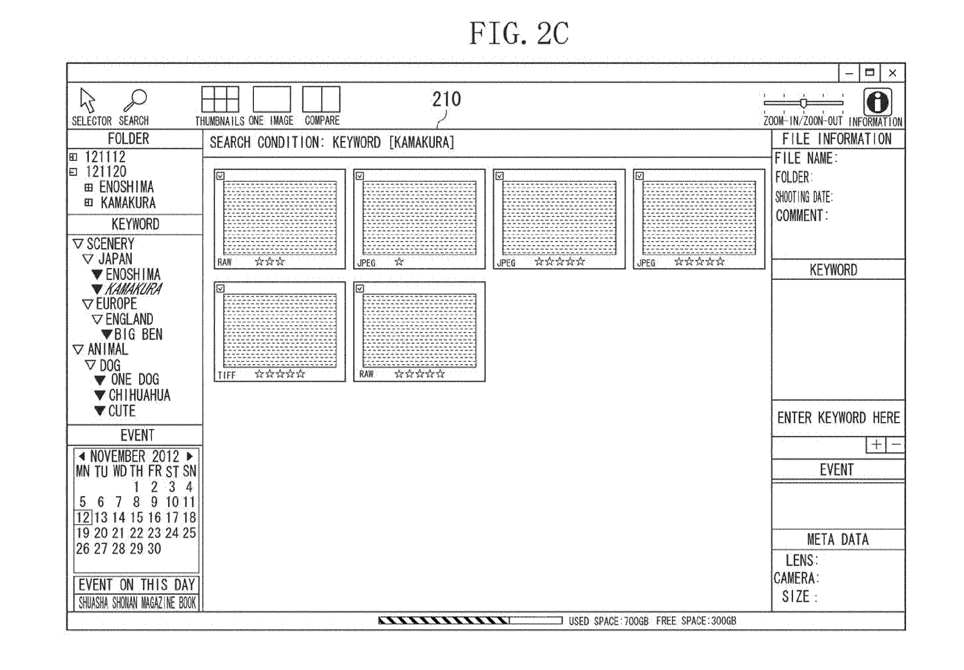

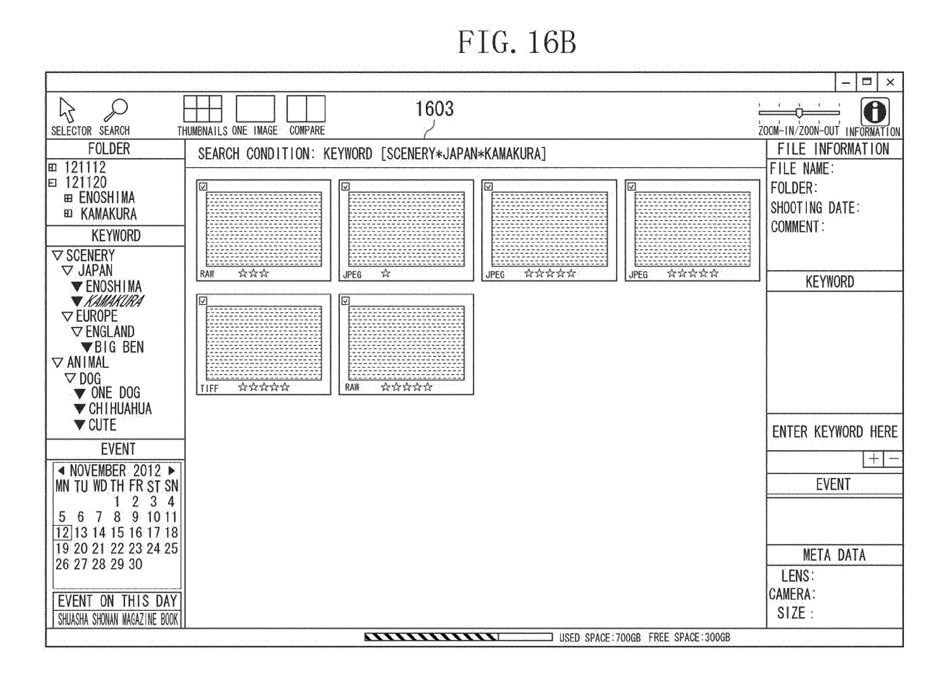

Operations of the image management system 101 having the above-described configuration according to the present illustrative embodiment will be described below with reference to Figs. 2A, 2B, and 2C through Figs. 16A and 16B.

User interfaces in the system according to the present illustrative embodiment will be described with reference to Figs. 2A, 2B, and 2C. Figs. 2A, 2B, and 2C illustrate examples of display screens displayed on the display 108. Referring to Figs. 2A, 2B, and 2C, a screen 201 includes an image selection area 202, a keyword input area 203, a finalization button 204, a keyword display area 205, a keyword selection area 206, a search button 207, a setting area 208, a search keyword input area 209, and a search condition display area 210.

Referring to Fig. 2A, the image selection area 202 is a display area for displaying a list of images handled by the image management system 101, and selecting an image by a user's input. The keyword input area 203 is a display area for inputting a keyword to be added to an image selected in the image selection area 202. When the finalization button 204 is pressed, the keyword input in the keyword input area 203 is added to the image selected in the image selection area 202. The keyword display area 205 displays the keyword added to the image selected in the image selection area 202. The keyword selection area 206 is a display area for displaying a plurality of structurally managed keywords based on the structurization, and receiving a selection of an arbitrary keyword node in the tree structure.

Referring to Fig. 2B, the setting area 208 is a display area for setting a condition for searching for an image managed by the image management system 101. When the search button 207 is pressed, the image management system 101 causes the setting area 208 to pop up on the screen as illustrated in Fig. 2B. The search keyword input area 209 receives a keyword input as the condition for searching for an image.

Referring to Fig. 2C, the search condition display area 210 displays the search condition for searching for an image. A result of the image search is listed on the image selection area 202. In other words, when a keyword is input in the search keyword input area 209, images to which the input keyword is added are displayed on the image selection area 202.

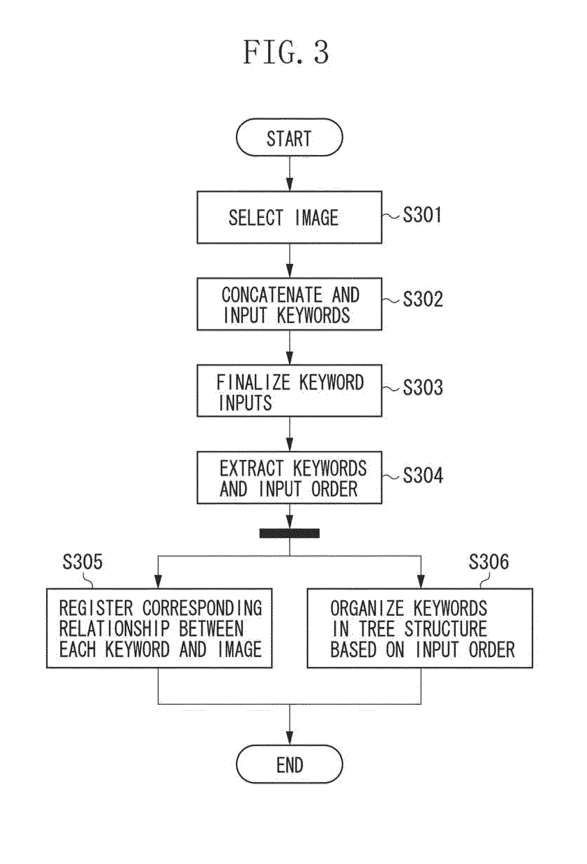

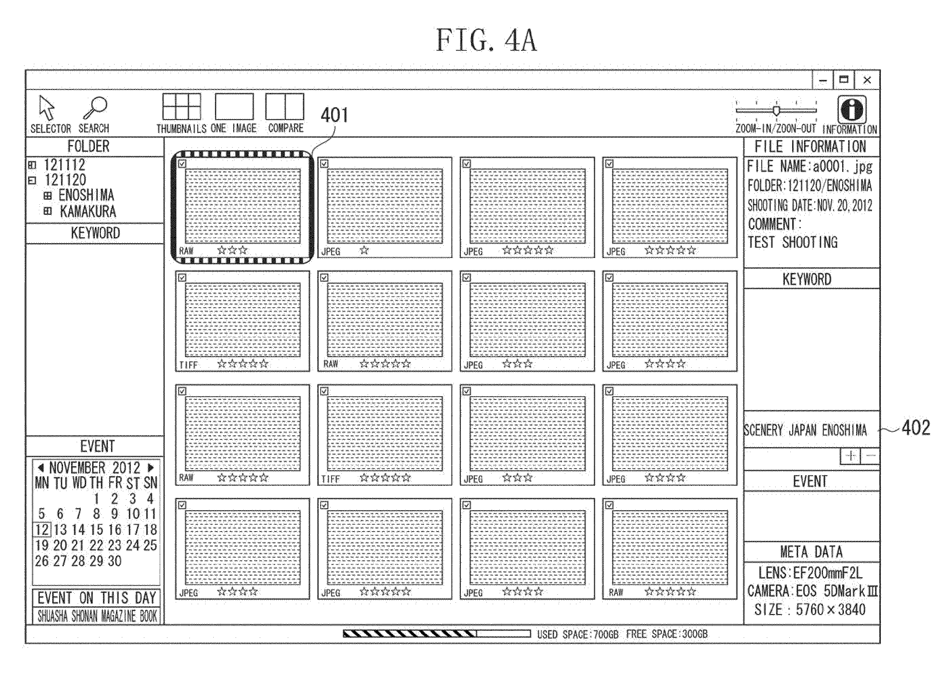

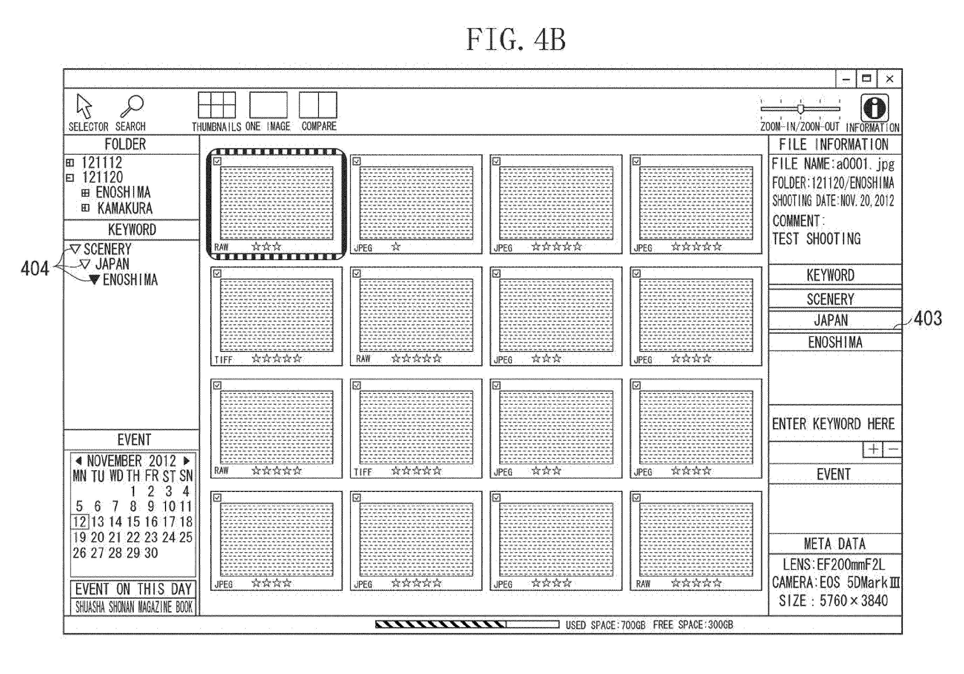

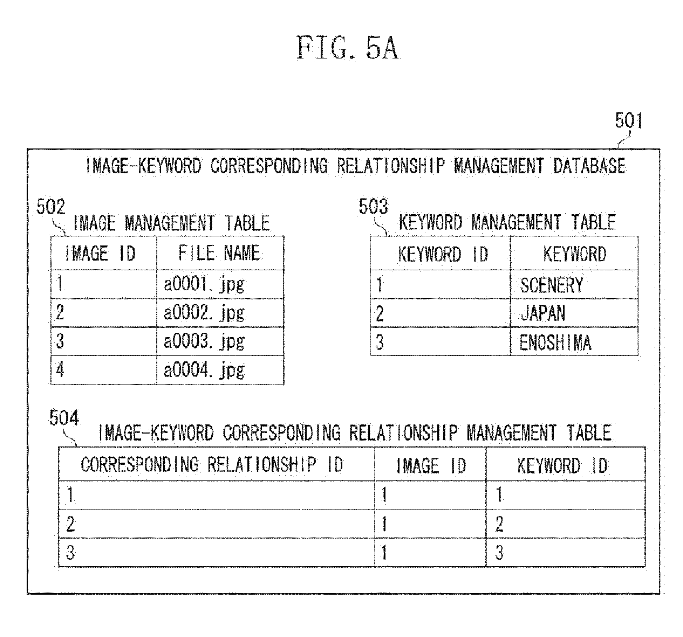

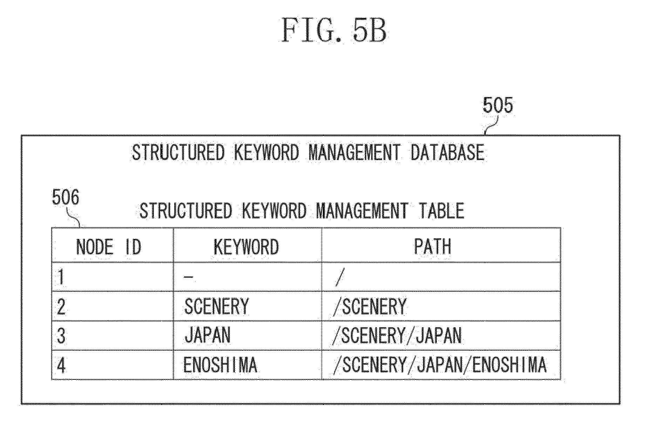

Next, keyword structuring processing will be described with reference to Figs. 3, 4A, 4B, 5A, and 5B. Fig. 3 is a flowchart illustrating the keyword structuring processing performed by the image management system 101 according to the present illustrative embodiment. Further, Figs. 4A and 4B illustrate user interfaces displayed during execution of the keyword structuring processing. Furthermore, Figs. 5A and 5B illustrate examples of data structures of a plurality of keywords structured by the keyword structuring processing.

Referring to Fig. 3, in step S301, the image management system 101 selects an image that is a keyword addition target based on a user's input received by the input unit 102. As illustrated in Fig. 4A, an image 401 selected in the image selection area 202 is highlighted. Next, in step S302, the input unit 102 receives one or more keyword inputs to be added to the image that is the keyword addition target based on a user's input. The input unit 102 acquires keywords 402 input in the keyword input area 203 as illustrated in Fig. 4A. Here, an arbitrary character string (a delimiter) is input between a plurality of the input keywords 402 to discriminate the plurality of the keywords 402. In this example, space is used as a delimiter, and three keywords "scenery", "Japan", and "Enoshima" are input as the input keywords 402 illustrated in Fig. 4A.

When the finalization button 204 is pressed, in step S303, the image management system 101 finalizes the keyword inputs. In step S304, the input unit 102 divides the keywords 402 by separating them with the delimiter, and extracts the individual keywords. Further, the input order acquisition unit 103 extracts the input order among the respective keywords. At this time, the input order acquisition unit 103 acquires the input order among the keywords based on a positional relationship among the respective keywords. More specifically, the input order acquisition unit 103 sets "1" as the input order number for the keyword input at the left end of the keyword input area 203. Then, the input order acquisition unit 103 increments the input order number by one from the keyword input at the left end to the keyword input at the right end. Regarding the keywords 402 illustrated in Fig. 4A, the input order numbers for "scenery", "Japan", and "Enoshima" are 1, 2, and 3, respectively.

The image management system 101 according to the present illustrative embodiment may be configured to determine the input order based on a chronological order in which the keywords are input, instead of the positional relationship. For example, it is assumed that when the keywords 402 illustrated in Fig. 4A are input, the keyword "Enoshima" is input immediately after the keyword "scenery" is input, and then the keyword "Japan" is input between the keywords "scenery" and "Enoshima". According to the input order determined based on the positional relationship, the input order numbers for the keywords "scenery", "Japan", and "Enoshima" are 1, 2, and 3, respectively, as described above. On the other hand, according to the input order determined based on the chronological input order, the input order numbers for the keywords "scenery", "Japan", and "Enoshima" are 1, 3, and 2, respectively.

Referring back to Fig 3, in step S305, the relationship management unit 106 associates the information of the image selected in step S301 with the information of each of the individual keywords extracted in step S304, and registers this association. The relationship management unit 106 registers the association by associating an identifier of the image with an identifier of the keyword in a database.

Fig. 5A illustrates a management database 501 for managing the corresponding relationships between images and keywords. The management database 501 includes a keyword management table 503 for managing keywords, an image management table 502 for managing images, and an image-keyword corresponding relationship management table 504 for managing keywords added to images. The individual keywords extracted in step S304 are registered into the keyword management table 503. Further, keyword identifications (IDs) (identifiers) are issued to the individual keywords. Further, the ID of the selected image is acquired from the image management table 502, and the corresponding relationships between the ID of the image and the IDs of the registered keywords are registered into the image-keyword corresponding relationship management table 504. In other words, the keywords added to the image are managed in the image-keyword corresponding relationship management table 504.

In the example illustrated in Fig. 5A, the input keywords "scenery", "Japan", and "Enoshima" are registered as keyword IDs 1, 2, and 3, respectively. Then, the keywords added to the image identified by the image ID 1 are registered in the image-keyword corresponding relationship management table 504 as corresponding relationship IDs 1, 2, and 3. In other words, in Fig. 5A, the keyword ID 1 (scenery), the keyword ID 2 (Japan), and the keyword ID 3 (Enoshima) are added to the image of the image ID 1. After the relationship management unit 106 completes adding the keywords to the image, the keyword presentation unit 110 displays the keywords added to the selected image in the keyword display area 205 as indicated by a numeral 403 in Fig. 4B.

After the keywords are extracted in step S304, in step S306, the structuring unit 104 organizes the keywords in a tree structure based on the keywords and the input order of the keywords, at the same time as the addition of the keywords to the image in step S305. The present example describes that steps S305 and S306 are performed in parallel with each other. However, step S306 may be performed after step S305 or step S305 may be performed after step S306. In step S306, the structuring unit 104 structures the keywords by setting the keyword input first in step S302 as a root node (a root) and the keyword input secondly as a child node of the keyword input first. Then, the structuring unit 104 sets the keyword input thirdly as a child node of the keyword input secondly. The structuring unit 104 repeats this process the number of times corresponding to the number of the input keywords to structure the plurality of keywords. After the structuring unit 104 completes structuring the plurality of keywords, the structure management unit 105 registers this structuring result into a database.

Referring to Fig. 5B, a structured keyword management database 505 is an example of the database for managing the structure of the structured keywords. A structured keyword management table 506 stores keywords and paths that indicate positional information of the respective keywords in the tree structure, and issues node IDs. The path information is formed based on the input order, and is stored in the form of the keywords concatenated according to the input order with use of a concatenation character string "/" for expressing an internal hierarchical relationship. In the example illustrated in Fig. 5B, the hierarchical relationship in the tree structure is expressed by the paths such that the paths of the first input keyword "scenery", the second input keyword "Japan", and the third input keyword "Enoshima" are "/scenery", "/scenery/Japan", and /scenery/Japan/Enoshima", respectively. After the structurization of the plurality of keywords is registered, the keyword presentation unit 110 acquires the structured keywords from the structure management unit 105, and displays the plurality of keywords added to the image in the keyword selection area 206 according to the structurization as indicated by a numeral 404 illustrated in Fig. 4B. The present illustrative embodiment may be configured to determine the input order based on either of a chronological order in which the keywords are input or a positional relationship.

In this manner, the image management system 101 according to the present illustrative embodiment can add keywords to an image, and form a keyword structure available for addition of a keyword to an image thereafter. Further, the image management system 101 according to the present illustrative embodiment structures a plurality of keywords actually input by a user to an image based on the order in which they are input, and therefore can associate a group of keywords, which are available for addition of a keyword to an image thereafter, with one another without requiring special keyword structurization. Further, structuring a plurality of keywords actually input by a user to an image based on the input order facilitates the customization of keywords for each user.

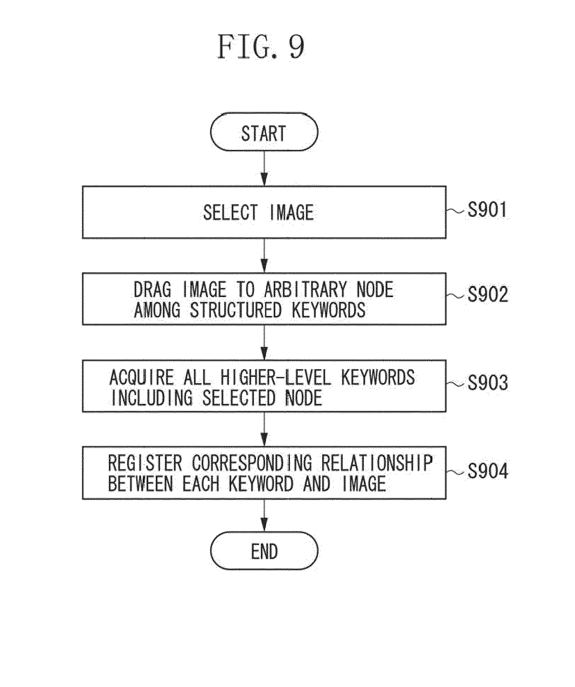

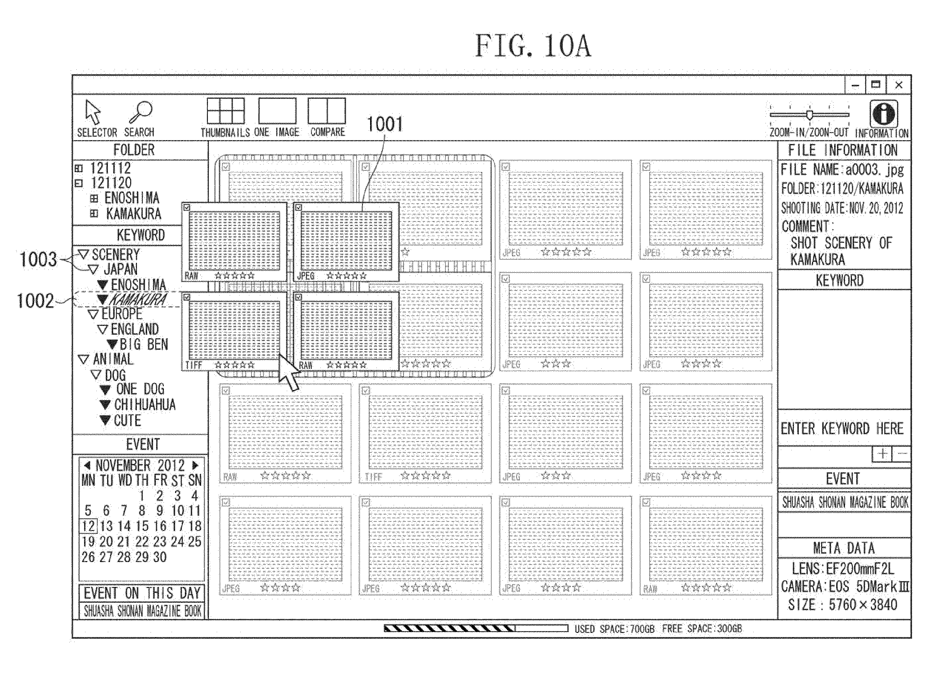

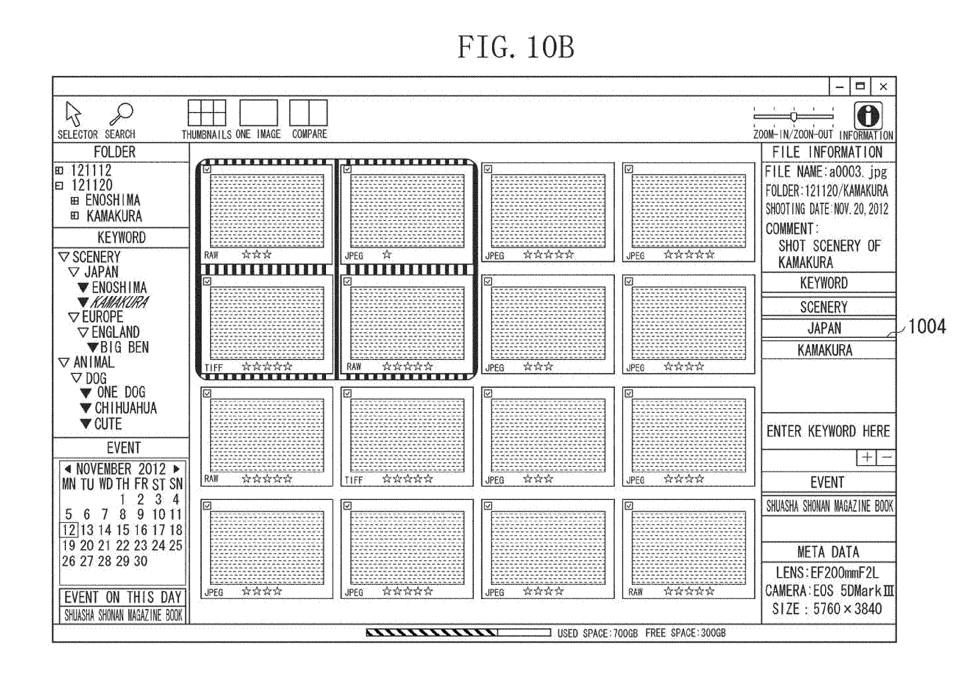

An example of adding a plurality of keywords to an image according to the keyword structure arranged based on the input order in which the keywords added to the above-described first image are input will be described with reference to a flowchart illustrated in Fig. 9 and to examples of user interfaces illustrated in Figs. 10A and 10B. Referring to the flowchart illustrated in Fig. 9, first, in step S901, the image management system 101 selects a second image, which is a keyword addition target image, based on a user's operation received by the input unit 102. In the example illustrated in Fig. 10A, a group of keyword addition target images 1001 is selected in step S901. Subsequently, in step S902, the image management system 101 receives an operation performed on the keyword addition target images 1001, and an operation of dropping the keyword addition target images 1001 onto a node in the keyword structure. After the drop operation is performed, the keyword node where the keyword addition target images 1001 have been dropped is input into the keyword acquisition unit 107. In other words, the keyword acquisition unit 107 selects one of the plurality of keywords added to the first image as a first keyword to be added to the second image. Then, in step S903, the keyword acquisition unit 107 searches for the input keyword node and a higher-level keyword of this keyword from the structured keyword management table 506 of the structured keyword management database 505, and acquires all of them. More specifically, the keyword acquisition unit 107 acquires a second keyword from the plurality of keywords, based on the first keyword and the input order in which the plurality of keywords added to the first image is input.

The keywords acquired by the keyword acquisition unit 107 are input into the addition unit 109. In step S904, the addition unit 109 adds all of the input keywords to the keyword addition target images 1001. More specifically, the addition unit 109 controls the relationship management unit 106, and registers corresponding relationships between the keyword addition target images 1001, and the node in the keyword structure where the keyword addition target images 1001 have been dropped and the higher-level node thereof into the image-keyword corresponding relationship management table 504.

In the example illustrated in Fig. 10A, it is assumed that the keyword addition target images 1001 are dragged to a node 1002 ("Kamakura") in a plurality of keywords 1003 structured in the order of "scenery", "Japan", and "Kamakura". In addition to the selected node "Kamakura" 1002, the keyword acquisition unit 107 acquires the higher-level nodes 1003, i.e., "Japan" and "scenery" as keywords. Then, the addition unit 109 adds these keywords 1002 and 1003 to the keyword addition target images 1001. The keyword presentation unit 110 acquires from the relationship management unit 106 keywords "scenery", "Japan", and "Kamakura" 1004 added to the images, and displays them in the keyword display area 205 (refer to the numeral 1004 illustrated in Fig. 10B).

In this manner, keywords can be easily added to the second image according to the keyword structure used for the addition of the keywords to the first image. For example, if the first image and the second image are similar to each other, the same keywords as those added to the first image can be added to the second image simply by performing a drag operation on the second image. Further, a plurality of keywords actually input by a user to the first image is added to the second image based on the order in which they are input, whereby other keywords that the user considers as keywords associated with a certain keyword can be easily added to the second image.

In step S903 in the above-described keyword addition processing, the keyword acquisition unit 107 selects higher-level keywords of the first keyword, which has been selected as the keyword to be added to the keyword addition target images 1001, from the keyword structure (i.e., keywords that are earlier in the input order than the first keyword). However, the image management system 101 according to the present illustrative embodiment may be configured such that the keyword acquisition unit 107 selects a lower-level keyword of the first keyword from the keyword structure as the keyword to be further added to the keyword addition target images 1001 (the keyword that is later in the input order than the first keyword).

Other operations of the image management system 101 according to the above-described first illustrative embodiment will be described as a second illustrative embodiment of the present invention. The image management system 101 according to the second illustrative embodiment is configured in a similar manner to the first illustrative embodiment, and can perform all of the operations described in the first illustrative embodiment.

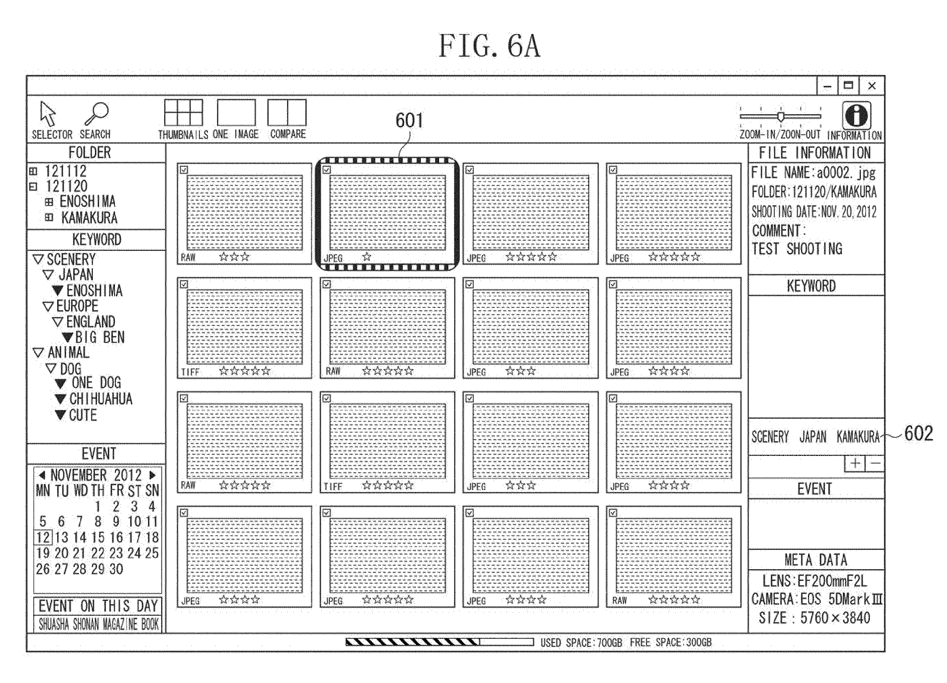

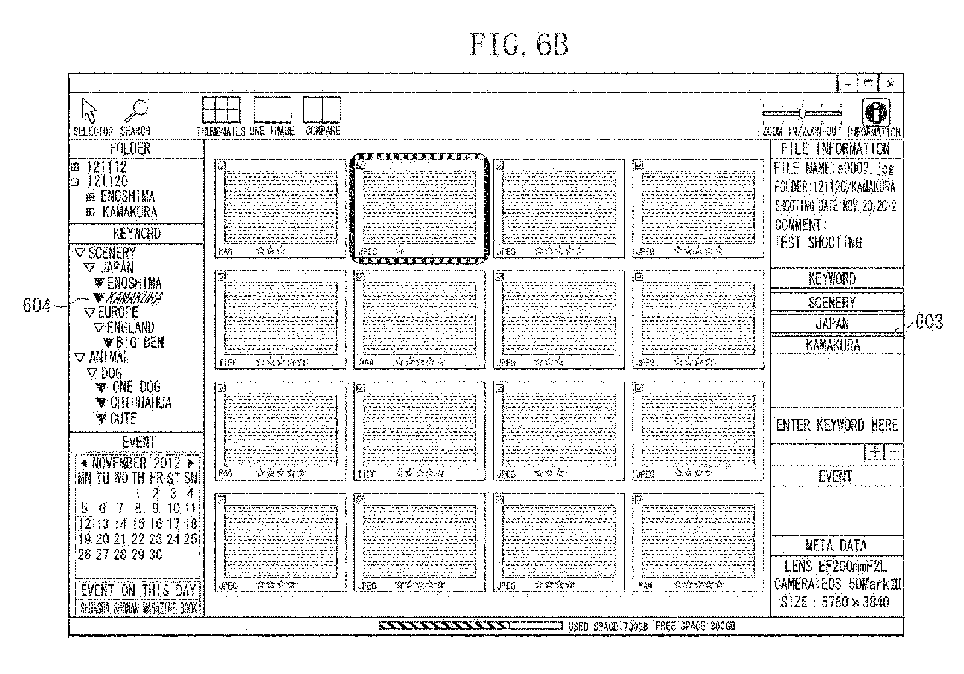

An operation for adding a keyword node to an existing keyword structure will be described with reference to Figs. 6A and 6B. In an example illustrated in Fig. 6A, it is assumed that the keyword structure "scenery"-"Japan"-"Enoshima" is already established. In this case, if keywords "scenery Japan Kamakura" 602 are added to an image 601 as respective keywords, a node "Kamakura" 604 is added as a new node under the existing "scenery" and "Japan" nodes. The registered keyword "Kamakura" 604 is displayed in the keyword selection area 206 by the keyword presentation unit 110 (refer to the numeral 604 in Fig. 6B). In this manner, if a plurality of input keywords is partially different from the nodes in the existing keyword structure, only the difference is displayed as an additional node, thereby reducing complexity in the visibility of the keyword structure.

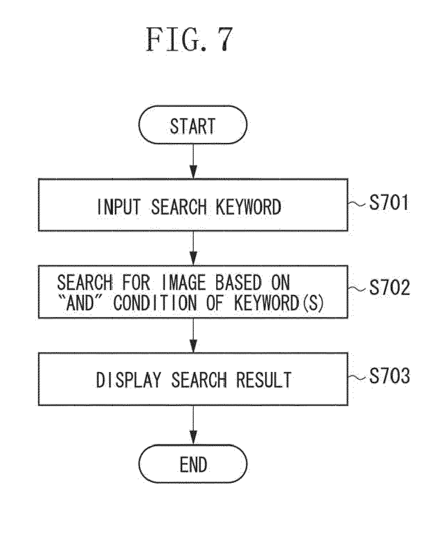

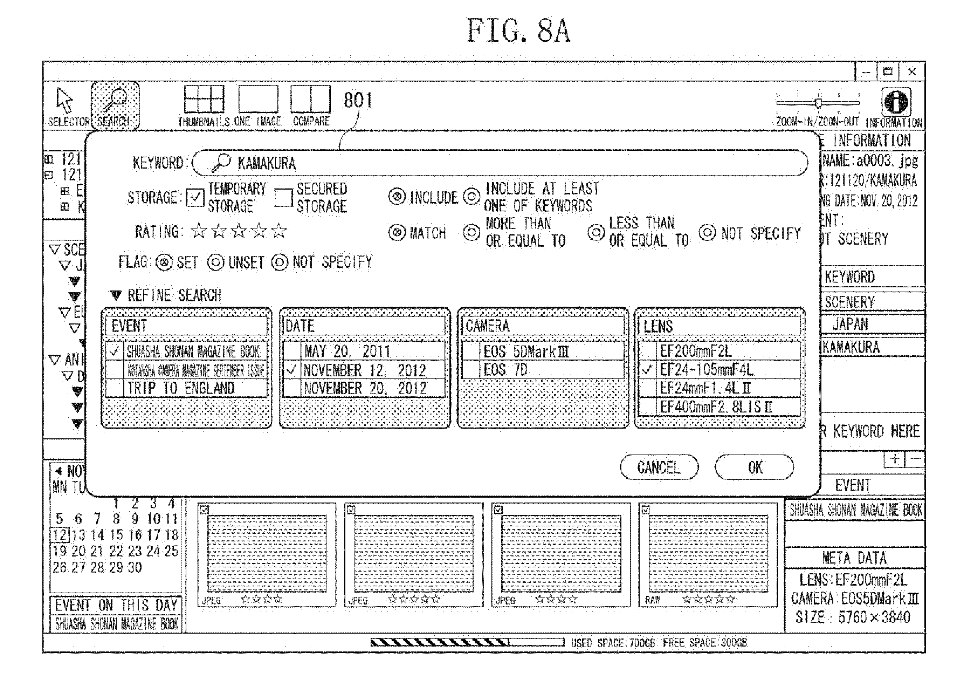

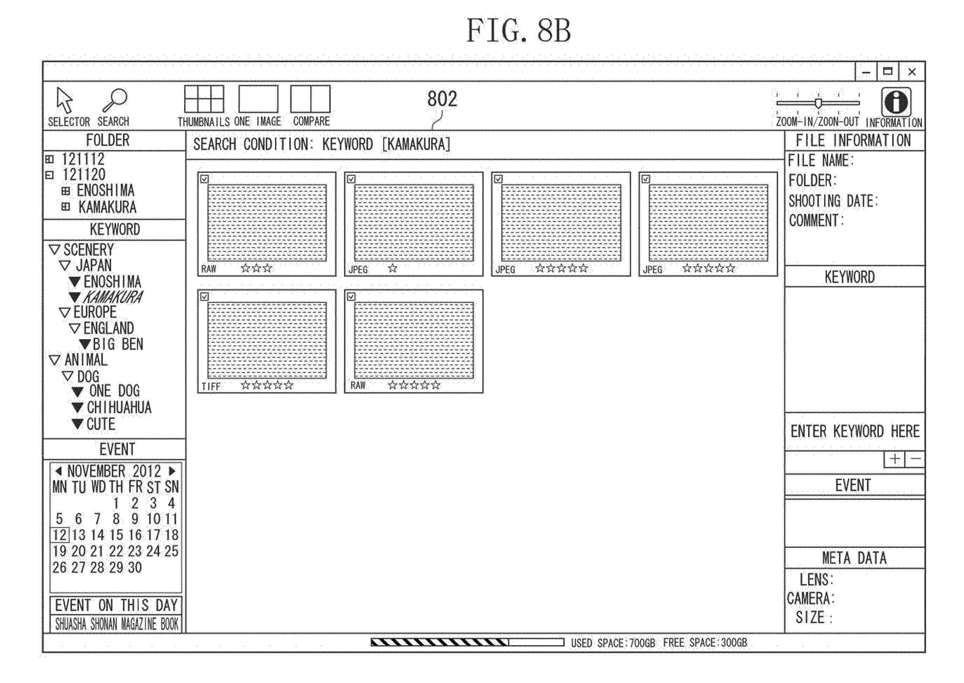

Next, image search processing for searching for an image to which a predetermined keyword is added will be described with reference to Figs. 7, 8A, and 8B. Upon detection of pressing of the search button 207 on the user interface, the image management system 101 causes the setting area 208 illustrated in Fig. 2B to pop up.

In step S701, the image management system 101 inputs a keyword 801 which serves as a search condition. Upon finalization of the input, the keyword 801 is input into the search unit 108. In step S702, the search unit 108 searches for an image with the AND condition of one or more input keywords 801 based on the corresponding relationships between images and keywords, which are managed by the relationship management unit 106, and returns an image that matches the condition. The search for the image is performed in the following manner. The search unit 108 extracts the keyword ID(s) of the keyword(s) 801 used as the search condition from the keyword management table 503. Then, the search unit 108 extracts an image ID associated with all of the keyword ID(s) 801 used as the search condition from the image-keyword corresponding relationship management table 504. Upon completion of the search, in step S703, the image management system 101 displays the image that is the search result, in association with the search condition presented by the condition presentation unit 111.

In an example illustrated in Fig. 8A, it is assumed that the keyword "Kamakura" 801 is input as the search condition into the search keyword input area 209. In an example illustrated in Fig. 8B, a result of the search by the search unit 108 is displayed in the image selection area 202. Further, the condition presentation unit 111 displays a search condition "Kamakura" 802. In this manner, an image can be searched for by using the keyword added in the above-described illustrative embodiment.

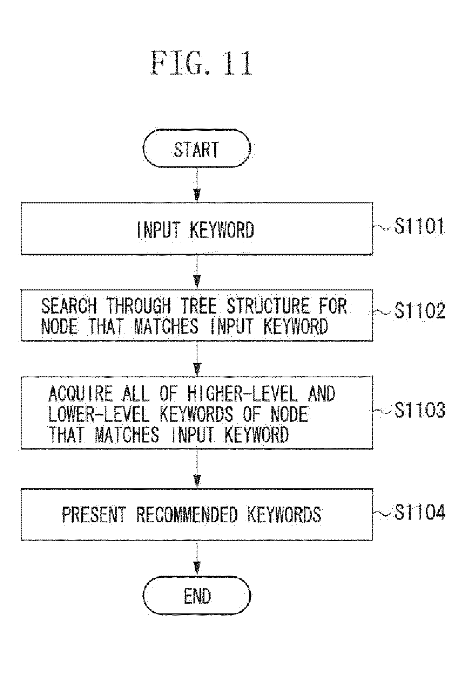

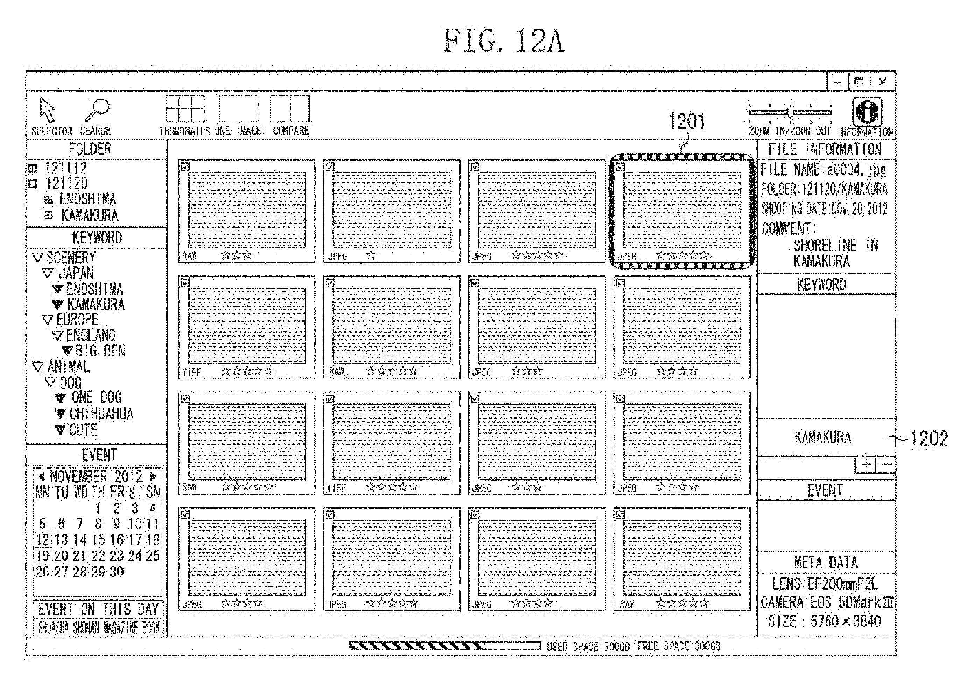

Next, processing for recommending a keyword to be added to an image with use of the structured keywords will be described with reference to Figs. 11 and Figs 12A through 12E. Referring to a flowchart of the processing for recommending a keyword illustrated in Fig. 11, in step S1101, the input unit 102 selects an image to which a keyword will be added, and inputs an arbitrary keyword. In an example illustrated in Fig. 12A, an image 1201 is selected as the image to which a keyword will be added. Further, a keyword "Kamakura" 1202 is input as the arbitrary keyword. Subsequently, in step S1102, the keyword acquisition unit 107 acquires a node that matches the input keyword 1202 from the structured keyword management table 506 of the structured keyword management database 505 managed by the structure management unit 105.

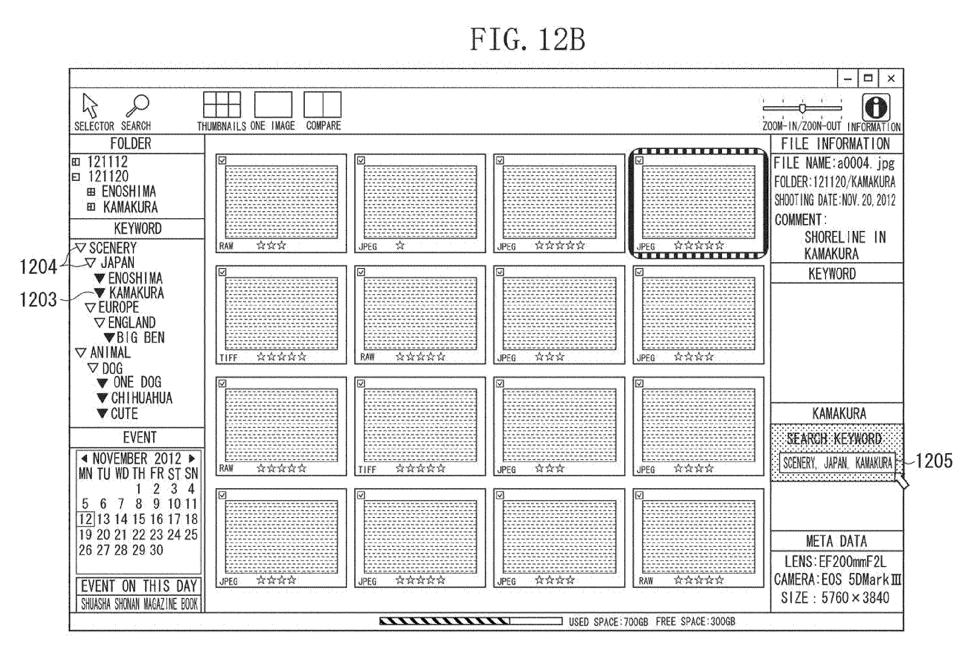

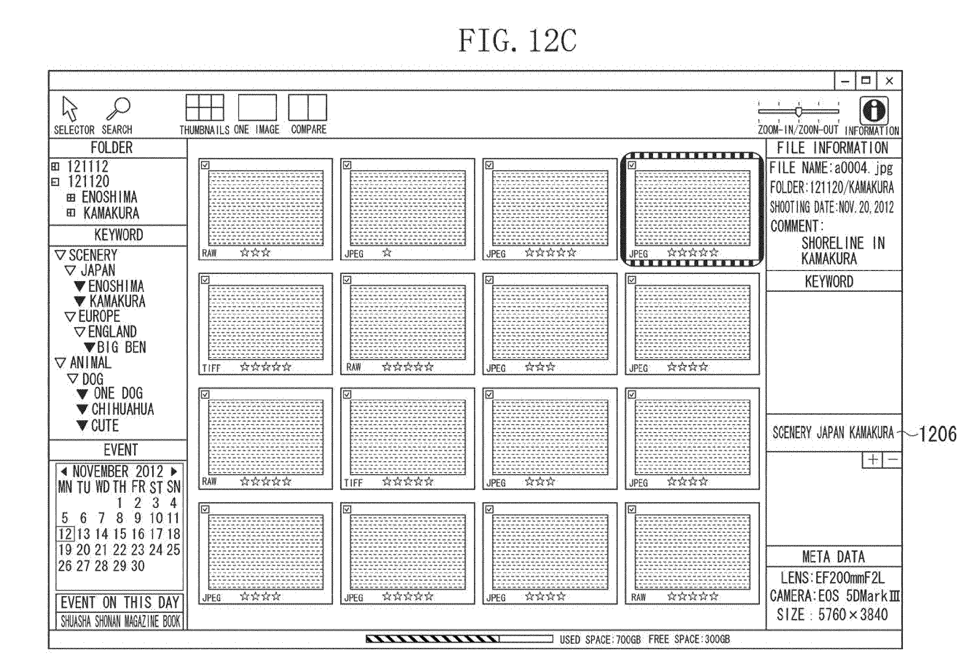

Further, in step S1103, the keyword acquisition unit 107 acquires, from the keyword structure including the keyword that matches the input keyword 1202, all of higher-level nodes and lower-level nodes of the keyword that matches the input keyword 1202. In an example illustrated in Fig. 12B, the keyword acquisition unit 107 acquires "scenery" and "Japan" 1204, which are higher-level nodes, in addition to a node "Kamakura" 1203 that matches the input keyword 1202, as keywords. In step S1104, the acquired keywords are displayed by the keyword presentation unit 110. In the example illustrated in Fig. 12B, the higher-level nodes "scenery" and "Japan" are lined up with the node "Kamakura" 1203, so that "scenery, Japan, Kamakura" are presented as recommended keywords 1205. When a desired keyword is selected from the recommended keywords, the selected keyword is input. In Fig. 12C, "scenery, Japan, Kamakura" recommended in Fig. 12B are input (indicated by a numeral 1206).

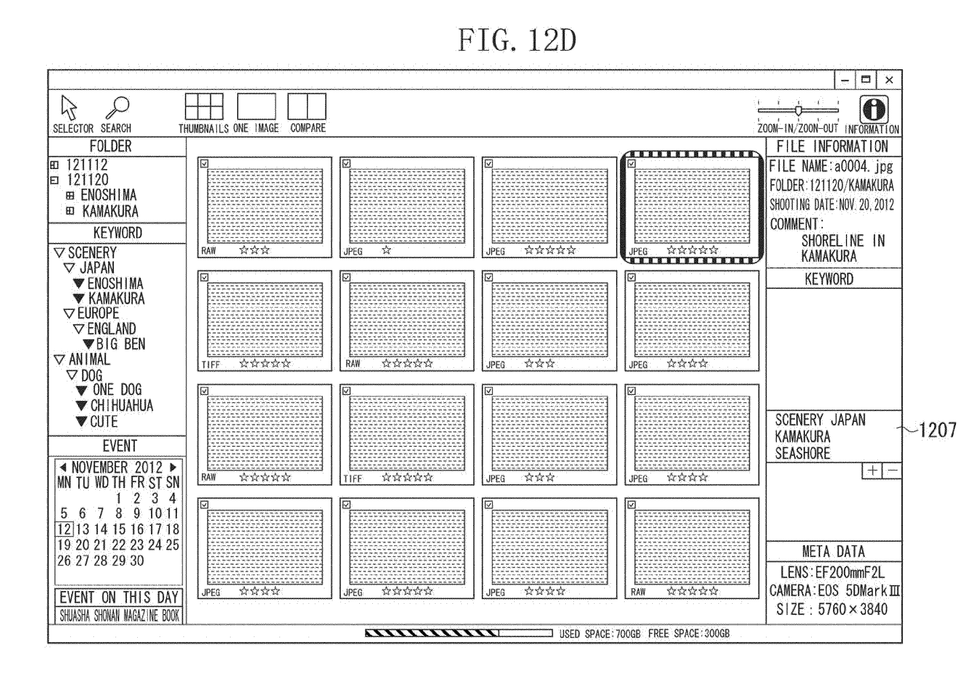

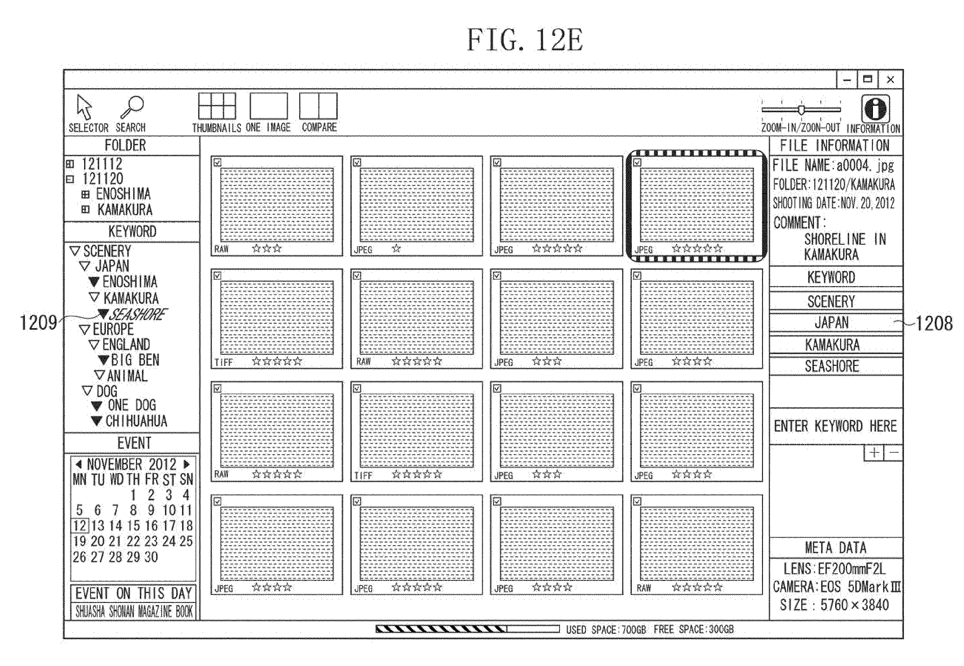

Further, a keyword to be added to an image by a user's input may be added in addition to the recommended keywords. As illustrated in Fig. 12D, if "scenery, Japan, Kamakura" are recommended, a keyword "seashore" 1207 can be additionally input and these four keywords can be added to the image. Further, the additionally input keyword may be structured. In Fig. 12E, registered keywords 1208 are displayed, and at the same time, a structured and newly registered node "seashore" 1209 is displayed. Like the above-described operation, use of recommended keywords allows a plurality of keywords to be added to an image simply by inputting only a keyword for specifying a desired node and a different keyword to be added without requiring a user to input all keywords that the user wants to add to the image each time.

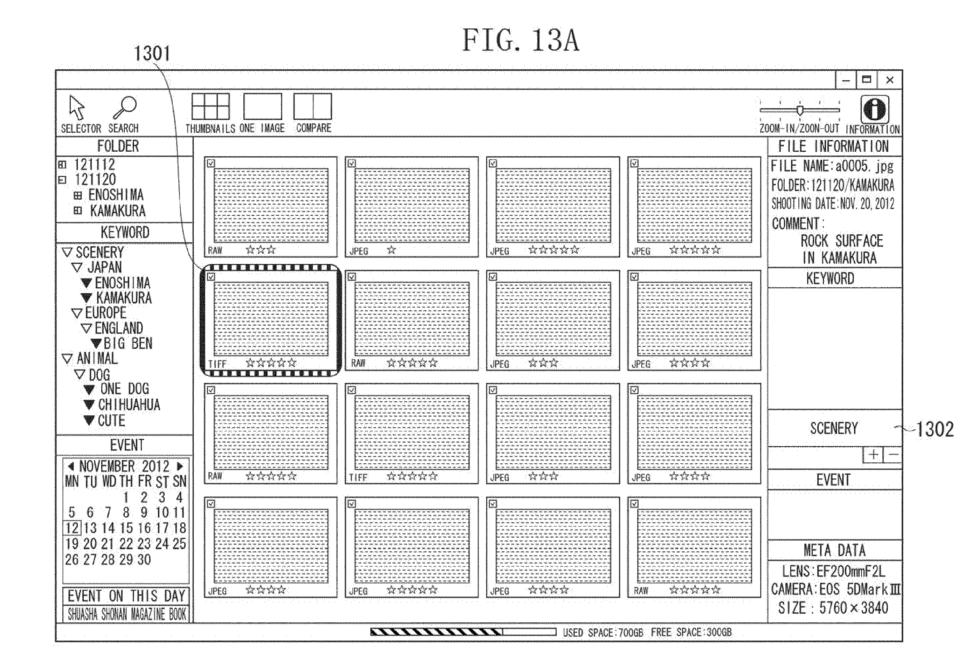

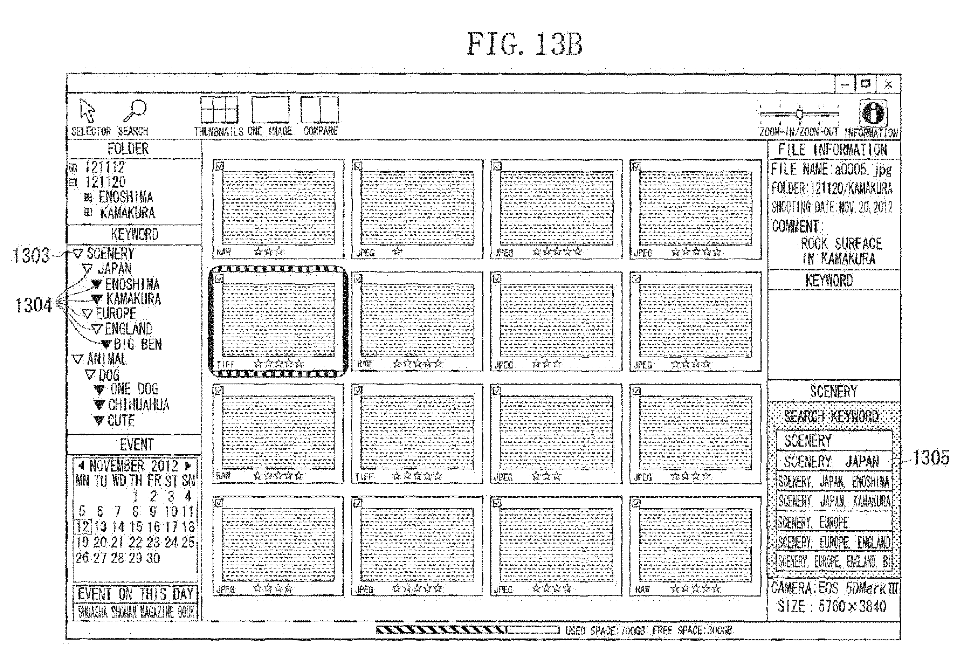

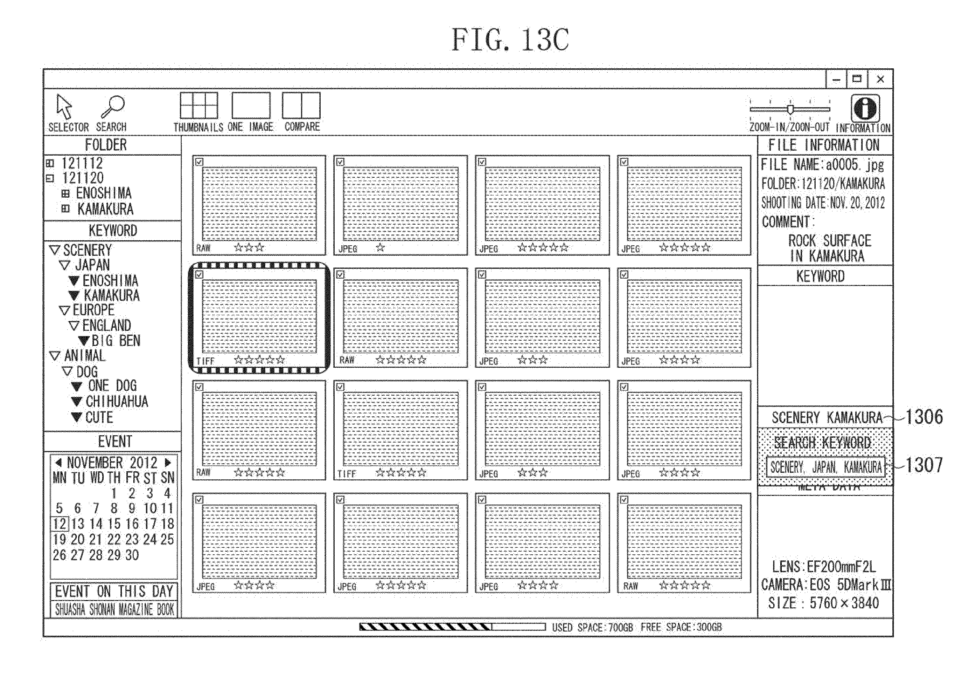

Next, another example of displaying the recommended keywords will be described with reference to Figs. 13A, 13B, and 13C. Referring to Fig. 13A, an image 1301 is selected, and a keyword "scenery" 1302 is input. Referring to Fig. 13B, if a node "scenery" 1303 that matches the input keyword 1302 exists as a structured keyword, lower-level nodes of the node "scenery" 1302 are displayed as recommended keywords 1305.

Under the node "scenery" 1303, there are nodes "Japan" and "Europe" as lower-level nodes. Under the node "Japan, there are nodes "Enoshima" and "Kamakura" as lower-level nodes. Under the node "Europe", there is a node "England" as a lower-level node. Under the node "England", there is a node "Big Ben" as a lower-level node. These lower-level nodes are lined up with the higher-level nodes thereof to recommend the keywords. In the present example, keywords are recommended such that the lower-level keywords 1304 are lined up with the higher-level keywords thereof, in addition to the keyword "scenery" 1303 that matches the input keyword 1302. In Fig. 13B, "scenery, Japan", "scenery, Japan, Enoshima", "scenery, Japan, Kamakura", "scenery, Europe", "scenery, Europe, England", and "scenery, Europe, England, Big Ben" are presented as the recommended keywords 1305.

In this case, further refining the recommended keywords from the plurality of recommended keywords 1305 can be achieved by inputting an additional keyword. In Fig. 13C, if a keyword "Kamakura" 1306 is further input in addition to the already input keyword "scenery" 1302, the image management system 101 according to the present illustrative embodiment extracts a keyword structure including "scenery" and "Kamakura" as nodes, and displays refined recommended keywords 1307. In the example illustrated in Fig. 13C, "scenery, Japan, Kamakura" are displayed as the recommended keywords.

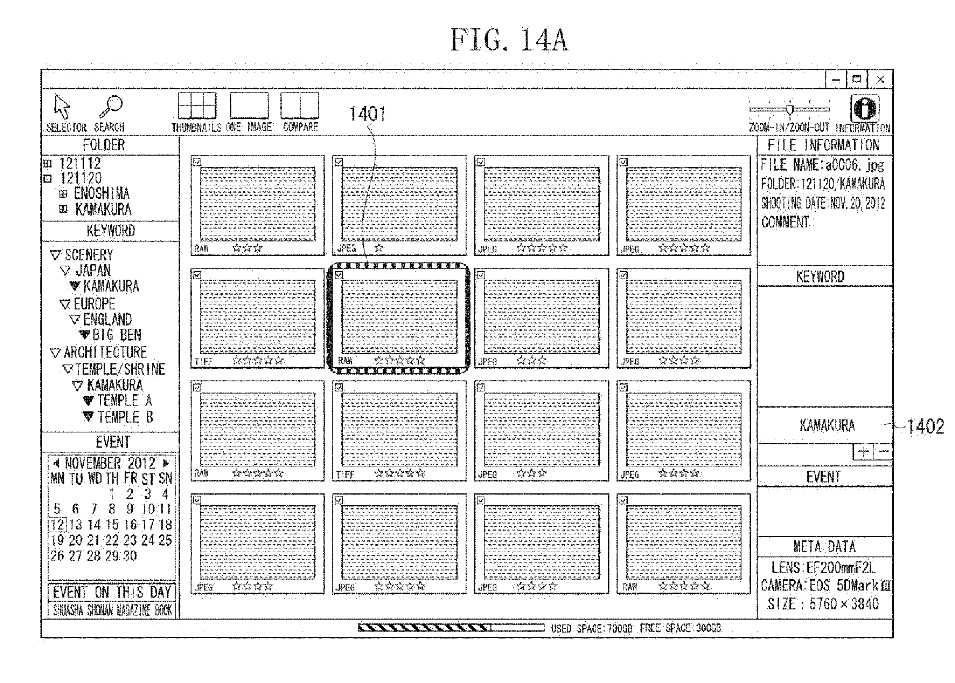

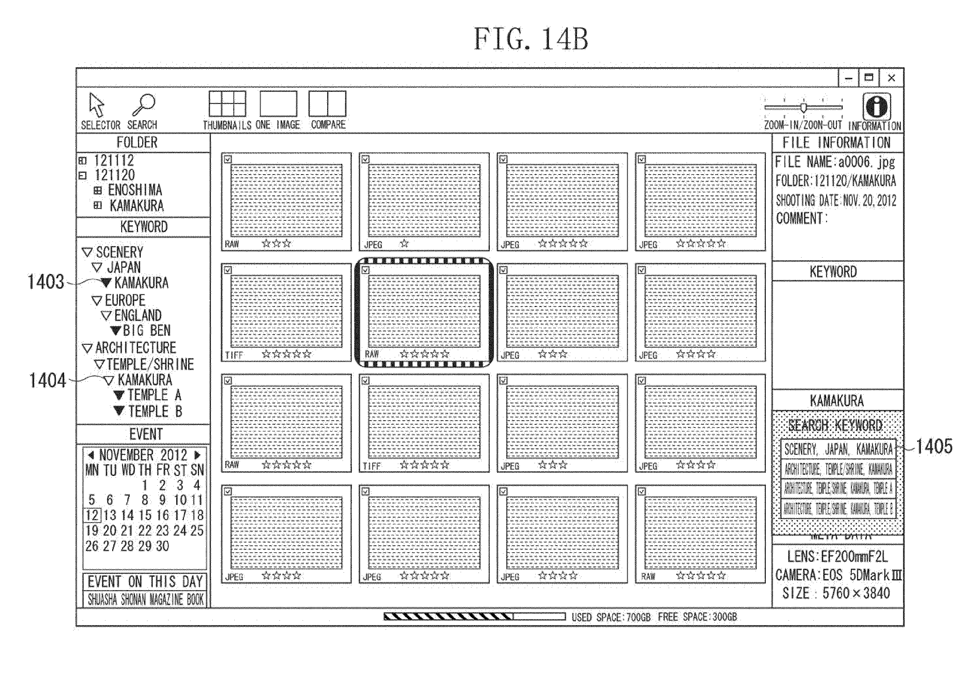

Next, another example of displaying the recommended keywords will be described with reference to Figs. 14A and 14B. If there is a plurality of nodes that matches an input keyword, recommended keywords are displayed in the following manner. In Fig. 14A, it is assumed that an image 1401 is selected as an image to which a keyword will be added, and a keyword "Kamakura" 1402 is input. In Fig. 14B, it is assumed that there are two keyword structures, i.e., a node "Kamakura" 1403 and a node "Kamakura" 1404 that match the input keyword 402. In this case, keywords are recommended such that all lower-level nodes including the node "Kamakura" 1403 and the node "Kamakura" 1404 are lined up with the higher-level nodes thereof, respectively. For the node "Kamakura" 1403, "scenery, Japan, Kamakura" are presented as recommended keywords 1405. For the node "Kamakura" 1404, "architecture, temple/shrine, Kamakura", "architecture, temple/shrine, Kamakura, temple A", and "architecture, temple/shrine, Kamakura, temple B" are presented as the recommended keywords 1405.

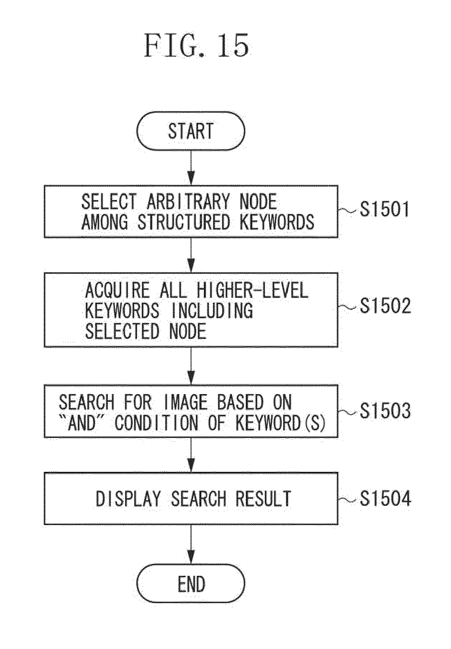

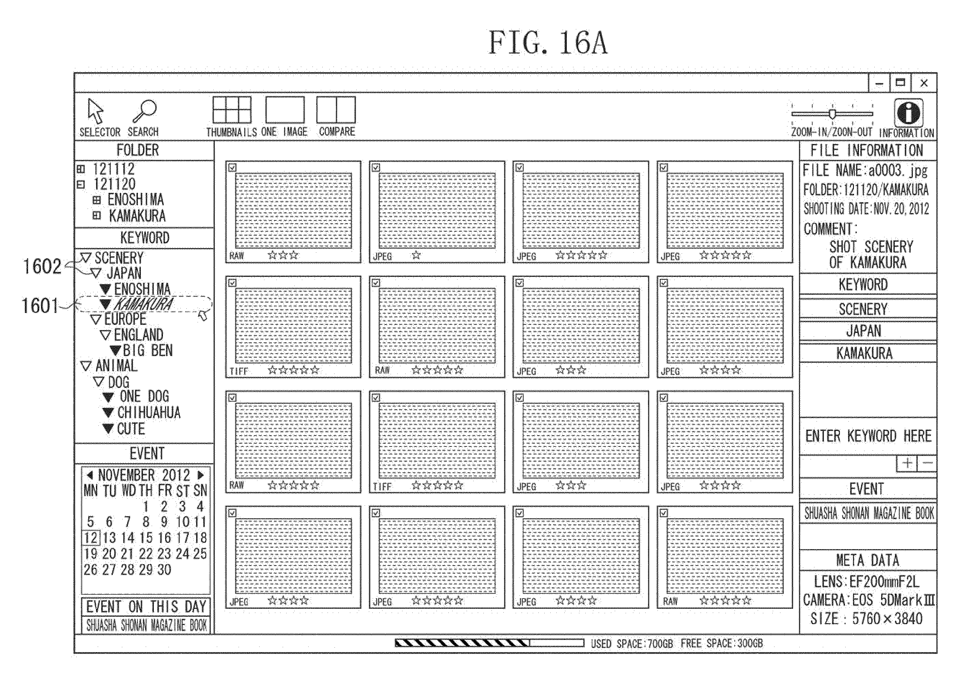

Next, image search processing with use of the structured keywords will be described with reference to Figs. 15, 16A, and 16B. Fig. 15 is a flowchart illustrating the image search processing with use of the structured keywords. First, in step S1501, an arbitrary node is selected among the structured keywords in the keyword selection area 206. In Fig. 16A, it is assumed that a node 1601 "Kamakura" is selected. Upon the selection of the node, the selected keyword node "Kamakura" 1601 is input into the keyword acquisition unit 107. In step S1502, the keyword acquisition unit 107 extracts the selected keyword node "Kamakura" 1601 and a higher-level node thereof from the structure management unit 105. In the present example, keyword nodes "Japan" and "scenery" 1602 are extracted as higher-level nodes of the keyword node "Kamakura" 1601. After the keyword acquisition unit 107 extracts the higher-level nodes "Japan" and "scenery" 1602, the extracted keyword nodes "Kamakura" 1601 and "Japan" and "scenery" 1602 are input into the search unit 108. Then, in step S1503, the search unit 108 searches for an image based on the AND condition with use of the selected keyword node "Kamakura" 1601 and the higher-level keyword nodes "Japan" and "scenery" 1602. In the present example, the search unit 108 performs a keyword search based on a search condition "scenery*Japan*Kamakura" 1603, which is the AND condition of the selected keyword "Kamakura" 1601 and the higher-level keywords "Japan" and "scenery" 1602. Upon completion of the keyword search, in step S1504, the condition presentation unit 111 acquires the search condition from the search unit 108, and displays the search condition in the search condition display area 210. The search unit 108 displays the images searched based on the search condition in the image selection area 202.This operation allows images to be managed by using the keywords structured when they are input.

Illustrative embodiments of the present invention, which have been described above in detail, may be, for example, a system, an apparatus, a method, and a program or a storage medium. More specifically, the above-described illustrative embodiments of the present invention may be applied to a system including a plurality of apparatuses (for example, a host computer, an interface apparatus, an imaging apparatus, and a web application), and may also be applied to an apparatus formed by a single device.

Further, the above-described illustrative embodiments according to the present invention can also be realized in the following manner. A recording medium (or a storage medium) storing a program code (a computer program) of software for realizing the functions of the above-described illustrative embodiments is supplied to a system or an apparatus. This storage medium is a computer-readable storage medium. Then, a computer (or a CPU or a micro processing unit (MPU)) of the system or the apparatus reads outs and executes the program code stored in the storage medium. In this case, the program code read out from the storage medium itself realizes the functions of the above-described illustrative embodiments, and the storage medium storing the program code is included in the illustrative embodiments according to the present invention.

According to the illustrative embodiments of the present invention, the operation regarding addition of a keyword to a file can be simplified.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to illustrative embodiments, it is to be understood that the invention is not limited to the disclosed illustrative embodiments. It will of course be understood that this invention has been described above by way of example only, and that modifications of detail can be made within the scope of this invention.

## Claims

1. An information processing apparatus comprising:
input means for inputting a plurality of keywords to be added to a first image;
structuring means for structuring, based on an input order of a plurality of keywords input by the input means, the plurality of keywords in a hierarchical structure;
selection means for selecting any one of the plurality of keywords added to the first image as a first keyword;
acquisition means for acquiring at least one second keyword from the plurality of keywords according to a hierarchical level of the first keyword in the hierarchical structure; and
addition means for adding the first keyword and the at least one second keyword to a second image.

2. The information processing apparatus according to claim 1, wherein the addition means is configured to add only some of the keywords inputted as the plurality of keywords to the second image depending on the order in which they are input.

3. The information processing apparatus according to claim 1 or claim 2, further comprising first presentation means for presenting the plurality of keywords structured by the structuring means based on the input order.

4. The information processing apparatus according to any preceding claim, further comprising second presentation means for presenting the plurality of keywords structured by the structuring means, if a keyword input by a user is included in the plurality of keywords.

5. The information processing apparatus according to any preceding claim, wherein the structuring means is configured to structure the plurality of keywords in a tree structure in which nodes are created to be arranged from a higher-level node to a lower-level node according to the input order of the keywords.

6. The information processing apparatus according to any preceding claim, further comprising acquisition means for acquiring the input order of the plurality of keywords input by the input means.

7. The information processing apparatus according to any preceding claim, wherein the selection means is configured to select any one of the plurality of keywords based on a drag operation performed on the second image.

8. The information processing apparatus according to any preceding claim, wherein the addition means is configured to add to the second image a keyword that is later or earlier in the input order than the first keyword among the plurality of keywords.

9. A method for controlling an information processing apparatus, the method comprising:
inputting a plurality of keywords to be added to a first image;
structuring, based on an input order of a plurality of keywords input by the inputting, the plurality of keywords in a hierarchical structure;
selecting any one of the plurality of keywords added to the first image as a first keyword;
acquiring at least a second keyword from the plurality of keywords according to a hierarchical level of the first keyword in the hierarchical structure; and
adding the first keyword and the second keyword to a second image.

10. A program which, when run on a device, causes the device to execute a method according to claim 9.

11. A computer-readable storage medium storing a program according to claim 10.
